# EUROPEAN PATENT APPLICATION

(11) **EP 3 199 850 A1**
(43) Date of publication of application: **02.08.2017**
(21) Application number: 17153803.6
(22) Date of filing: 30.01.2017
(51) Int. Cl.: F16K 31/163, B64D 13/00, F16K 37/00, F16K 1/22, F15B 15/28, G01D 5/22

(54) **BLEED VALVE POSITION SENSOR**

(30) Priority: 28.01.2016 US 201615009290
(71) Applicant: Hamilton Sundstrand Corporation, Windsor Locks, CT 06096-1010 (US)
(72) Inventor: ARMY, Donald E., Enfield, CT 06082 (US)
(74) Representative: Hughes, Andrea Michelle

(57) **Abstract**

A position sensor (130) for a bleed valve (100) with a piston (110), a valve disc (104), and a piston linkage (108) to couple the piston and the valve disc, the position sensor includes a coil (144), and a core assembly (150), including a core (152) disposed within the coil, a link retainer (154) coupled to the piston, and a connecting rod (156) coupled to the core and the link retainer.

## Description

### BACKGROUND

The subject matter disclosed herein relates to position sensors, and more particularly, to position sensors for bleed valves.

Bleed valves are used within aircraft to control bleed air flow. Bleed valves can utilize position sensors to provide information regarding the position and operation of the bleed valve. Often, position sensors cannot withstand the high pressure high temperature environment that a bleed valve experiences.

### BRIEF SUMMARY

According to an embodiment, there is provided a position sensor for a bleed valve with a piston, a valve disc, and a piston linkage to couple the piston and the valve disc, the position sensor includes a coil, and a core assembly, including a core disposed within the coil, a link retainer coupled to the piston, and a connecting rod coupled to the core and the link retainer.

According to an embodiment, there is provided a bleed valve, including a piston, a valve shaft, a piston linkage to couple the piston and the valve shaft, a valve disc coupled to the valve shaft, and a position sensor, including a coil, and a core assembly, including a core disposed within the coil, a link retainer coupled to the piston, and a connecting rod coupled to the core and the link retainer.

Technical function of the embodiments described above includes a core assembly, including a core disposed within the coil, a link retainer coupled to the piston linkage, and a connecting rod coupled to the core and the link retainer.

Other aspects, features, and techniques of the embodiments will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the FIGURES:
FIG. 1 is a cross sectional view of one embodiment of a bleed valve;
FIG. 2 is an isometric view of one embodiment of a core assembly for use with the position sensor of FIG. 1; and
FIG. 3 is a partial isometric view of one embodiment of a coil assembly for use with the position sensor of FIG. 1.

### DETAILED DESCRIPTION

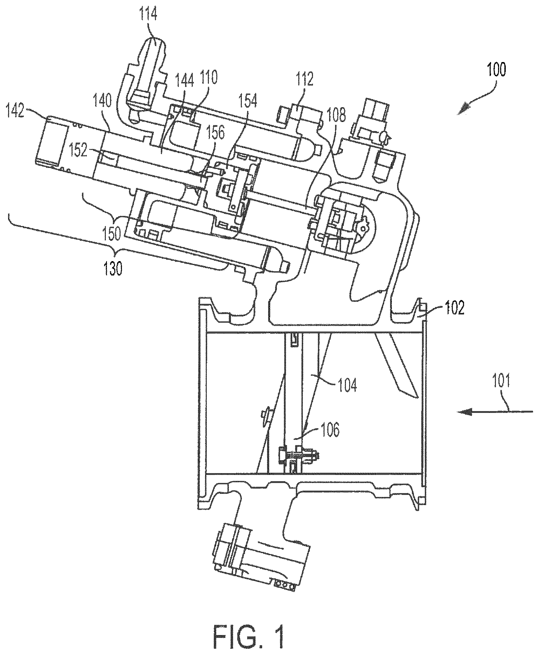

Referring to the drawings, FIG.1 shows a bleed valve 100. In the illustrated embodiment, the bleed valve 100 includes a valve body 102, a valve disc 104, a valve shaft 106, a piston 110 and a position sensor 130. In the illustrated embodiment, the bleed valve 100 can be used to direct bleed air flow 101 to desired components and areas within an aircraft or other suitable vehicle. Bleed air flow 101 can often be high temperature and high pressure air flow, with temperatures ranging between 537.8°C - 760°C (1000F - 1400F) and pressures exceeding 6895 kPa (1000 psi). In the illustrated embodiment, the position sensor 130 can determine a relative location of the valve disc 104 to determine the current state of operation of the bleed valve 100 without being exposed to the harsh environment created by the bleed air flow 101. In certain embodiments, multiple bleed valves 100 can be utilized within a bleed airflow system to control bleed air flow 101 at various locations within the system. Bleed valves 100 can be controlled by a centralized controller.

In the illustrated embodiment, the valve disc 104 moves within the valve body 102 to control the bleed air flow 101 through the valve body 102. The valve disc 104 position controls the amount and flow of the bleed air flow 101 through the valve body 102. The valve disc 104 can be a butterfly valve style disc that rotates within the valve body 102 to control the bleed air flow 101. In the illustrated embodiment, the valve disc 104 is rotated by a valve shaft 106. In the illustrated embodiment, the valve shaft 106 can rotate along the valve shaft 106 axis to manipulate the position of the valve disc 104 relative to the valve body 102. The valve shaft 106 can be rotated by any suitable actuator.

In the illustrated embodiment, the valve shaft 106 is coupled to a piston 110 by a piston linkage 108. The piston 110 can be actuated by a hydraulic or pneumatic supply provided by the servo connection 114. In the illustrated embodiment, the movement of the piston 110 is transferred to the valve shaft 106 to convert the translational motion of the piston 110 to rotational motion of the valve shaft 106. Therefore, the movement of the piston 110 can adjust the position of the valve disc 104.

In the illustrated embodiment, the piston 110 can translate within a cavity formed by the valve actuator cap 112. As shown in FIG. 1, the valve actuator cap 112 is spaced apart from the valve disc 104 and the bleed air flow 101. Therefore, in the illustrated embodiment, the valve actuator cap 112 is subjected to a lower temperature environment than bleed air flow 101.

In the illustrated embodiment, the position sensor 130 is disposed within the valve actuator cap 112. In the illustrated embodiment, the position sensor 130 includes the linear variable differential transformer (LVDT) assembly 140 and the core assembly 150. In the illustrated embodiment, the position sensor 130 is located away from the high pressure, high temperature bleed air flow 101 to allow for improved operation and reliability.

During operation of the bleed valve 100, the position sensor 130 can provide position feedback that can provide information regarding the operation conditions of the bleed valve 100. In the illustrated embodiment, the position sensor 130 is coupled to the piston 110. Since the translation of the piston 110 results in rotation of the valve disc 104, the position sensor 130 can measure the translation of the piston 110 and determine the rotation of the valve disc 104 without being exposed to the bleed air flow 101.

In the illustrated embodiment, the position sensor 130 can convert the movement or position of the core assembly 150 within the LVDT assembly 140 into a proportional electrical signal that can be received by a central controller. Advantageously, the position sensor 130 utilizes electromagnetic coupling and does not require electrical contact between the core assembly 150 and the LVDT assembly 140 to allow for enhanced reliability and sealing. During operation, alternating current drives the LVDT assembly 140 and as the core assembly 150 changes position, the induced voltage within the LVDT assembly 140 changes, providing a position feedback signal.

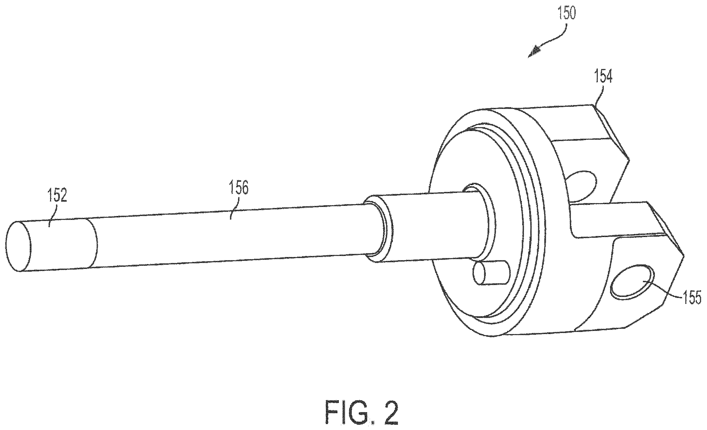

Referring to FIGS. 1 and 2, the core assembly 150 is shown. In the illustrated embodiment, the core assembly 150 includes a core 152, a link retainer 154, and a connecting rod 156. In the illustrated embodiment, the core 152 can translate within the LVDT assembly 140 to provide a signal corresponding to the position of the valve disc 104 since the link retainer 154 is coupled to the piston 110. In certain embodiments, the elements of the core assembly 150 including the core 152, the link retainer 154 and the connecting rod 156 can be brazed together. In certain embodiments, the elements of the core assembly 150 including the core 152, the link retainer 154 and the connecting rod 156 can be mechanically fastened by the use of threads, screws, rivets, or any other suitable mechanical fastening means.

In the illustrated embodiment, the core 152 is a ferromagnetic core that translates within the LVDT assembly 140 to generate a feedback signal as previously described. The core 152 is sized to translate within the LVDT assembly 140 without contacting the LVDT assembly 140. In the illustrated embodiment, the core 152 is coupled to a connecting rod 156 that also does not contact the LVDT assembly 140 and transfers the movement of the link retainer 154.

In the illustrated embodiment, the core assembly 150 is coupled to the piston linkage 108 to translate the core assembly 150 along with the piston linkage 108. In the illustrated embodiment, the link retainer 154 attaches to the piston linkage 108 to allow a connection to the piston linkage 108 without hindering the movement of the piston 110, the piston linkage 108, the valve shaft 106 or the valve disc 104. In certain embodiments, retaining features 155 of the link retainer 154 can interface with various features of the piston linkage 108 or the piston 110 to attach to either the piston linkage 108 or the piston 110. In certain embodiments, the core assembly 150 can be otherwise mechanically fastened to the piston linkage 108 or the piston 110 using a bolt or a nut.

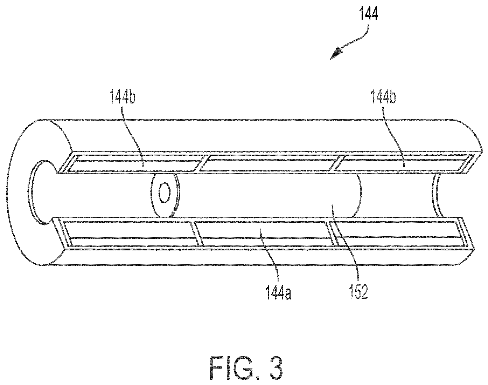

Referring to FIGS. 1 and 3, the LVDT assembly 140 is shown. In the illustrated embodiment, the LVDT assembly 140 includes electrical connectors 142 and coils 144. In certain embodiments, the LVDT assembly 140 can be threaded into the valve actuator cap 112. In the illustrated embodiment, the electrical connectors 142 are crimped connectors or mechanical connectors.

In the illustrated embodiment, the coils 144 include a primary coil 144a and a secondary coil 144b. In certain embodiments, the coils 144a and 114b can be encapsulated in compacted ceramic powder to allow for greater heat resistance and resiliency. During operation of the LVDT assembly 140, an alternating current drives the primary coil 144a and causes a voltage to be induced in the secondary coil 144b. As the core 152 moves, the primary coil 144a causes the induced voltage in the secondary coil 144b to change. In the illustrated embodiment, the output voltage of the secondary coil 144b provides a differential voltage corresponding to the position of the core 152. Therefore, the output voltage of the secondary coil 144b can provide the position of the valve disc 104 without requiring the position sensor 130 to be located within the bleed air flow 101.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the scope of the invention as defined by the claims. Additionally, while various embodiments have been described, it is to be understood that aspects may include only some of the described embodiments. Accordingly, the embodiments are not to be seen as limited by the foregoing description, but are only limited by the scope of the appended claims.

## Claims

1. A position sensor for a bleed valve (100) with a piston (110), a valve disc (104), and a piston linkage (108) to couple the piston and the valve disc, the position sensor (130) comprising:
a coil (144); and
a core assembly (150), comprising:
a core (152) disposed within the coil;
a link retainer (154) coupled to the piston; and
a connecting rod (156) coupled to the core and the link retainer.

2. The position sensor of claim 1, wherein a core position of the core corresponds to a valve disc position of the valve disc (104).

3. The position sensor of claim 1 or 2, wherein the core assembly is brazed.

4. The position sensor of claim 1 or 2, wherein the core assembly is mechanically fastened.

5. The position sensor of any preceding claim, the coil including at least one electrical connector (142).

6. The position sensor of claim 5, wherein the at least one electrical connector is a crimped electrical connector.

7. The position sensor of claim 5, wherein the at least one electrical connector is a mechanical electrical connector.

8. The position sensor of any preceding claim, the coil including a primary coil (144a).

9. The position sensor of any preceding claim, the coil including a secondary coil (144b).

10. The position sensor of any preceding claim, wherein the coil is formed with a ceramic powder encapsulation.

11. A bleed valve, comprising:
a piston (110);
a valve shaft (106);
a piston linkage (108) to couple the piston and the valve shaft;
a valve disc (104) coupled to the valve shaft; and
a position sensor (130), comprising:
a coil (144); and
a core assembly (150), comprising:
a core (152) disposed within the coil;
a link retainer (154) coupled to the piston; and
a connecting rod (156) coupled to the core and the link retainer.

12. The bleed valve of claim 11, further comprising a valve actuator cap (112) disposed adjacent to the piston, wherein the coil is disposed within the valve actuator cap.

13. The bleed valve of claim 11 or 12, wherein the core assembly is brazed.

14. The bleed valve of claim 11 or 12, wherein the core assembly is mechanically fastened.

15. The bleed valve of any of claims 11 to 14, the coil including at least one electrical connector.
